# EUROPEAN PATENT SPECIFICATION

(11) **EP 3 273 678 B1**
(45) Date of publication and mention of the grant of the patent: **10.04.2019**
(21) Application number: 17177613.1
(22) Date of filing: 23.06.2017
(51) Int. Cl.: H04N 5/445

(54) **DISPLAY APPARATUS AND METHOD OF SEPARATELY DISPLAYING USER INTERFACE THEREOF**
ANZEIGEVORRICHTUNG UND VERFAHREN ZUR GETRENNTEN ANZEIGE EINER ZUGEHÖRIGEN BENUTZEROBERFLÄCHE
APPAREIL D'AFFICHAGE ET PROCÉDÉ POUR FOURNIR UNE INTERFACE D'UTILISATEUR CORRESPONDANTE

(30) Priority: 22.07.2016 KR 20160093218
(43) Date of publication of application: 24.01.2018
(73) Proprietor: Samsung Electronics Co., Ltd., Gyeonggi-do 16677 (KR)
(72) Inventor: KIM, Byuk Sun, 08785 Seoul (KR)
(74) Representative: Taor, Simon Edward William

(56) References cited:
- EP-A2- 1 022 898
- EP-A2- 1 195 989
- DE-A1- 19 843 919
- JP-A- 2003 131 656
- US-A1- 2010 107 102
- US-A1- 2014 359 656
- US-A1- 2015 082 340

## Description

The present disclosure relates generally to a display apparatus and a method of displaying a user interface thereof.

A display apparatus displays an image signal received from the outside. A recent display apparatus may not only unilaterally provide a function or information to a user, but also provide various functions or information in response to a demand of a user. A television (TV) released recently may provide a user interaction function as well as a function of receiving a broadcast.

In addition, as communication technology has been developed, various services may be provided through the interworking between electronic devices. Especially, the display apparatus may provide various contents to a user by connecting with an external electronic device such as a set-top box, a game console, a smart phone, or the like.

When the display apparatus receives content from an external electronic device, and when the display apparatus receives an image including a user interface provided by the external electronic device, a user interface of the display apparatus may overlap the user interface of the external electronic device.

In addition, when the display apparatus merely receives only an image including a user interface without directly receiving information on the user interface from a content providing device, the display apparatus may not verify whether the user interface of the display apparatus overlaps the image.

EP1195989 relates to a video transmitting device and a video display device.

JP2003131656 relates to a video processing device.

Example aspects of the present disclosure address at least the above-mentioned problems and/or disadvantages and provide at least the advantages described below. Accordingly, various example embodiments of the present disclosure provide a display apparatus, capable of separately displaying user interfaces without overlapping each other by detecting positions of the user interfaces to be displayed on the display apparatus, and a method of controlling the same.

In accordance with an example aspect of the present disclosure, a display apparatus is provided according to claim 1.

In accordance with another example aspect of the present disclosure, a method of separately displaying a user interface of a display apparatus is provided according to claim 8.

Other aspects, advantages, and salient features of the disclosure will become apparent to those skilled in the art from the following detailed description, which, taken in conjunction with the annexed drawings, discloses various example embodiments of the present disclosure.

The above and other aspects, features, and attendant advantages of the present disclosure will be more apparent and more readily appreciated from the following detailed description, taken in conjunction with the accompanying drawings, in which like reference numerals refer to like elements, and wherein:
FIG. 1 is a diagram illustrating an example display system, according to various example embodiments of the present disclosure;
FIG. 2 is a block diagram illustrating an example configuration of a display apparatus, according to various example embodiments of the present disclosure;
FIG. 3 is a diagram illustrating an example table of key mapping information stored in a memory of a display apparatus, according to various example embodiments of the present disclosure;
FIGS. 4A and 4B are diagrams illustrating example screens of a display apparatus when a content providing device is connected with the display apparatus, according to various example embodiments of the present disclosure;
FIGS. 5A and 5B are diagrams illustrating example screens of a display apparatus, according to various example embodiments of the present disclosure;
FIGS. 6A, 6B, and 6C are diagrams illustrating example screens displaying a first user interface at a position different from that of a top menu of a second user interface, according to an example embodiment of the present disclosure;
FIGS. 7A, 7B, and 7C are diagrams illustrating example screens displaying a first user interface at a position different from that of a sub-menu of a second user interface, according to an example embodiment of the present disclosure;
FIGS. 8A, 8B, and 8C are diagrams illustrating example screens displaying a first user interface at a position different from that of a replay popup message of a second user interface, according to an example embodiment of the present disclosure;
FIGS. 9A and 9B are diagrams illustrating an example screen displaying a first user interface with transparency different from that of a second user interface, according to an example embodiment of the present disclosure;
FIG. 10 is a diagram illustrating an example screen displaying a first user interface at a period different from that of a second user interface, according to an example embodiment of the present disclosure;
FIGS. 11A and 11B are diagrams illustrating an example screen on which the size of a first user interface is changed, according to an example embodiment of the present disclosure;
FIG. 12 is a diagram illustrating an example screen on which a skip key is generated, according to an example embodiment of the present disclosure;
FIG. 13 is a flowchart illustrating an example method of arranging a user interface of a display apparatus, according to various example embodiments of the present disclosure; and
FIG. 14 is a flowchart illustrating an example method of determining the type of a content providing device, according to various example embodiments of the present disclosure.

Throughout the drawings, it should be noted that like reference numbers are used to depict the same or similar elements, features, and structures.

Hereinafter, various example embodiments of the present disclosure will be described in greater detail with reference to accompanying drawings.

Example embodiments of the present disclosure are provided to describe the scope of the present disclosure to those of ordinary skill in the art. Example embodiments of the present disclosure may, however, be embodied in many different forms and should not be understood as being limited to the embodiments set forth herein. Rather, these example embodiments are provided so that this disclosure will be thorough and complete, and will convey the scope of the present disclosure to those of ordinary skill in the art.

Hereinafter, various example embodiments of the present disclosure may be described with reference to accompanying drawings. Accordingly, those of ordinary skill in the art will recognize that modifications, equivalents, and/or alternatives of the various embodiments described herein can be made without departing from the scope and spirit of the present disclosure. With regard to description of drawings, similar elements may be marked by similar reference numerals.

In this disclosure, the expressions "have", "may have", "include" and "comprise", or "may include" and "may comprise" used herein indicate existence of corresponding features (e.g., elements such as numeric values, functions, operations, or components) but do not exclude presence of additional features.

In this disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in this disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. On the other hand, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be used as, for example, the expression "suitable for", "having the capacity to", "designed to", "adapted to", "made to", or "capable of'. The term "configured to" does not refer only to "specifically designed to" in hardware. Instead, the expression "a device configured to" may refer to a situation in which the device is "capable of' operating together with another device or other components. For example, a "processor configured to (or set to) perform A, B, and C" may refer to a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in this disclosure are used to describe various embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of this disclosure. In some cases, even if terms are terms which are defined in this disclosure, they may not be interpreted to exclude embodiments of this disclosure.

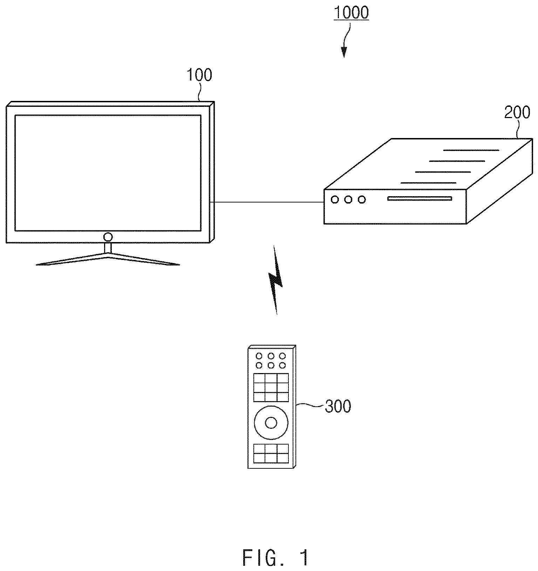

FIG. 1 is a diagram illustrating an example display system, according to various example embodiments of the present disclosure.

Referring to FIG. 1, a display system 1000 may include a display apparatus 100, a content providing device 200, and a remote controller 300.

According to an example embodiment, the display apparatus 100 may receive an image from an external device. For example, the display apparatus 100 may receive broadcast content from a broadcasting station through a broadcasting network or may receive web content from a web server through the Internet. Alternatively, the display apparatus 100 may be connected with the content providing device 200 through a wired communication interface (e.g., a high definition multimedia interface (HDMI) or a digital video/visual interactive (DVI), a video graphics array (VGA), or the like, but not limited thereto), or a short-range wireless communication interface (e.g., Bluetooth, near field communication (NFC), wireless-fidelity (Wi-Fi), or the like, but not limited thereto) to receive the image from the content providing device 200. The image received from the content providing device 200 may include not only an image of content, but a second user interface generated by the content providing device 200. The content may include, for example, a film, a drama, news, a game, or the like, but is not limited thereto.

According to an embodiment, the display apparatus 100 may display a first user interface on a display. For example, the display apparatus 100 may display the first user interface by allowing the first user interface to overlap the image received from the content providing device 200.

According to an embodiment, the display apparatus 100 may be implemented with various electronic devices which are able to display content by receiving the content from an external device such as a TV, a desk top computer, a laptop, a smart phone, a tablet personal computer (PC), a monitor, an electronic picture frame, or the like, but is not limited thereto.

According to an embodiment, the content providing device 200 may transmit content image, which is received from an external device or stored in an embedded (or exterior) recording medium, to the display apparatus 100. For example, the content providing device 200 may receive broadcast content from a broadcasting station through a broadcasting network or may receive web content from a web server through the Internet. The content providing device 200 may reproduce content stored in the recording medium and may transmit the content image to the display apparatus 100. The recording medium may include, for example, a compact disc (CD), a display versatile disc (DVD), a hard disc, a bluelay disc, a memory card, a universal serial bus (USB) memory, or the like, but is not limited thereto.

According to an embodiment, an image, which is transmitted to the display apparatus 100 by the content providing device 200, may include the second user interface of the content providing device 200 as well as the content image. For example, the content providing device 200 may overlap the content image and the second user interface and may transmit the content image and the second user interface, which overlap with each other, to the display apparatus 100.

According to an embodiment, the content providing device 200 may be implemented with various devices, such as a set-top box, a game console (e.g., Xbox™, PlayStation™, or the like), a smart phone, a tablet PC, and the like, but not limited thereto, which are able to receive or store content and transmit the content to the display apparatus 100.

According to an embodiment, the remote controller 300 may receive an input, such as, for example, a user input, and may transmit a control signal corresponding to the received user input to the display apparatus 100 or the content providing device 200. The remote controller 300 may communicate with the display apparatus 100 or the content providing device 200 through a short-range wireless communication interface such as a Bluetooth, NFC, or IR transceiver, or the like, but is not limited thereto. According to an embodiment, the remote controller 300 may include at least one of: a button, a touch panel, a motion recognition sensor, or a voice recognition sensor to receive the user input.

The display apparatus 100 may receive the image including the second user interface without directly receiving information on the second user interface from the content providing device 200. The display apparatus 100 may not determine the position of the second user interface included in the image received from the content providing device 200. Accordingly, the first user interface of the display apparatus 100 and the second user interface of the content providing device 200 may be displayed while overlapping each other. According to various example embodiments, the display apparatus 100 may display the first user interface by separating the first user interface from the second user interface such that a user clearly recognizes each of the first user interface and the second user interface.

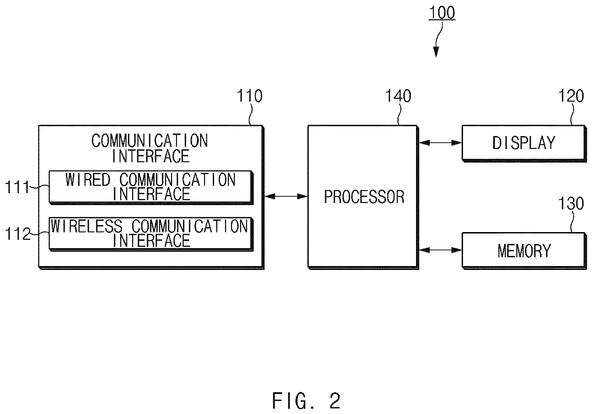

FIG. 2 is a block diagram illustrating an example configuration of a display apparatus, according to various example embodiments of the present disclosure.

Referring to FIG. 2, the display apparatus 100 may include a communication interface (e.g., including communication circuitry) 110, a display 120, a memory 130, and a processor (e.g., including processing circuitry) 140.

The communication interface 110 may include various communication interface circuitry and communicate with an external device. For example, the communication interface 110 may receive an image (e.g., a video image) from the content providing device 200. According to an embodiment, the communication interface 110 may include a wired communication interface (e.g., including wired interface circuitry) 111 and a wireless communication interface (e.g., including wireless interface circuitry) 112. The image received from the content providing device 200 may include the second user interface generated by the content providing device 200 as well as a content image.

The wired communication interface 111 may communicate in a wired manner with the content providing device 200. For example, the wired communication interface 111 may be connected with the content providing device 200 in a wired manner to receive the image from the content providing device 200. The wired communication interface 111 may include, for example, an HDMI interface, a DVI interface, or a VGA interface, or the like, but is not limited thereto.

The wireless communication interface 112 may wirelessly communicate with the content providing device 200 or the remote controller 300. For example, the wireless communication interface 112 is wirelessly connected with the content providing device 200 to receive the image from the content providing device 200. Alternatively, the wireless communication interface 112 is wirelessly connected with the remote controller 300 to transmit or receive a control signal to or from the remote controller 300. The wireless communication interface 112 may include, for example, a Bluetooth interface, an NFC interface, a Wi-Fi interface, or an IR interface, or the like, but is not limited thereto.

The display 120 may display the image received from the content providing device 200. For example, the display 120 may display, at a specific frame rate, the image received the content providing device 200.

The memory 130 may store key mapping information. The key mapping information may include, for example, key input information of the remote controller 300 and user interface information corresponding to the key input information. The memory 130 may be, for example, a non-volatile memory such as a flash memory, a hard disc, or the like, but is not limited thereto.

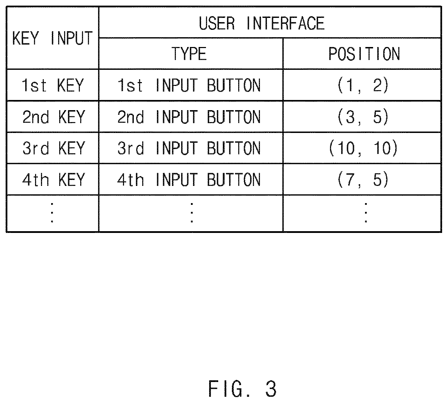

FIG. 3 is a diagram illustrating an example table of key mapping information stored in a memory of a display apparatus, according to various example embodiments of the present disclosure.

Referring to FIG. 3, the memory 130 may store key mapping information, which includes key input information and user interface information mapped corresponding to the key input information, in the form of a table. For example, the key input information may be identification information (e.g., information on an identification code) for identifying a plurality of keys included in the remote controller 300. The user interface information may be information on the type of a user interface and the position of the user interface. The type of the user interface may be, for example, identification information for identifying various user interfaces based on an image or a text. The position of the user interface may be information on coordinates of the user interface on the display 120. Alternatively, the user interface information may further include display time of the user interface. The display time of the user interface may be time in which the display of the user interface on the display 120 is lasted after the user interface is displayed on the display 120.

According to an embodiment, the memory 130 may store key mapping information for a plurality of devices. For example, the memory 130 may store key mapping information including key input information of a first user interface of the display apparatus 100 and user interface information mapped corresponding to the key input information. The memory 130 may store multiple pieces of key mapping information according to types (e.g., manufacturers or models) of content providing devices 200.

According to an embodiment, the key mapping information stored in the memory 130 may be continuously updated through the connection with an external server. For example, if the type or the position of the first user interface is changed due to the software update of the display apparatus 100, the memory 130 may store the key mapping information of the first user interface that is updated. If the type or the position of the second user interface is changed due to the software update of the content providing device 200, the memory 130 may store the key mapping information of the second user interface that is updated.

The processor 140 may include various processing circuitry and control the overall operation of the display apparatus 100. For example, the processor 140 may control each of the communication interface 110, the display 120, and the memory 130 to display the first user interface and the second user interface by separating the first user interface from the second user interface according to various embodiments of the present disclosure.

According to an embodiment, the display apparatus 100 may include at least one processor 140. For example, the display apparatus 100 may include a plurality of processors 140 which are able to perform at least one function. According to an embodiment, the processor 140 may be implemented with a SoC (system on chip) including, for example, and without limitation, a central processing unit (CPU), a graphic processing unit (GPU), a memory, or the like.

According to an embodiment, each of components for performing functions of the processor 140 may be an individual hardware module or a software module implemented by at least one processor. For example, a function performed by each of the modules included in the processor 140 may be performed by one processor or may be performed by each individual processor.

According to an embodiment, the processor 140 may determine the type of the content providing device 200 if the content providing device 200 is connected with (e.g., initially connected with) the communication interface (e.g., the wired communication interface (111)). For example, the processor 140 may transmit to the remote controller 300 a control signal allowing the remote controller 300 to transmit key input information. The remote controller 300 may transmit the key input information (e.g., in a broadcasting manner) to the content providing device 200 in response to the control signal. If the content providing device 200 receives the key input information from the remote controller 300, the content providing device 200 may transmit an image including a second user interface corresponding to the received key input information to the display device 100.

According to an embodiment, the processor 140 may analyze the received image to determine the position of the second user interface. For example, and without limitation, the processor 140 may determine the position of the second user interface using an image analysis algorithm.

The processor 140 may compare the analyzed position of the second user interface and the key input information transmitted from the remote controller 300 with at least one key mapping information stored in the memory 130. For example, the memory 130 may store multiple pieces of key mapping information according to types (e.g., manufacturers or models) of the content providing device 200. The processor 140 may determine the key mapping information, which is matched with the analyzed position of the second user interface and the key input information, among the multiple pieces of the key mapping information stored in the memory 130 and thus may determine the type of the content providing device 200.

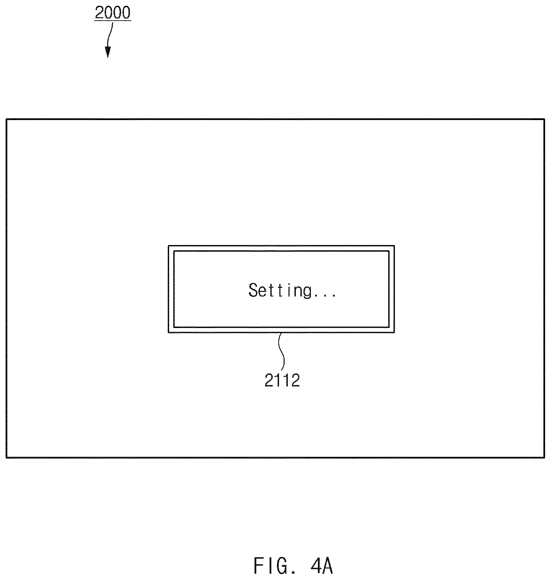

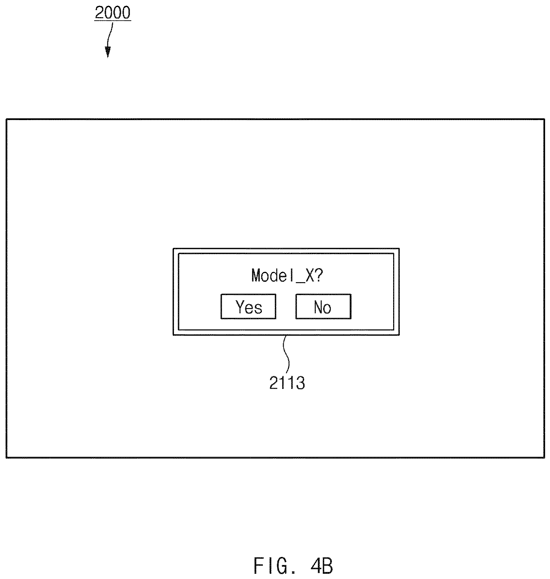

FIGS. 4A and 4B are diagrams illustrating example screens of a display apparatus when a content providing device is connected with the display apparatus, according to various example embodiments of the present disclosure.

Referring to FIGS. 4A and 4B, when the processor 140 determines the type of the content providing device 200, the processor 140 may display a setting pop-up message 2112 for notifying a user of that the type of the content providing device 200 is being determined on a screen 2000 of the display 120. According to an embodiment, if the processor 140 finishes the determination of the type of the content providing device 200, the processor 140 may display a model confirmation pop-up message 2113 for requesting the user to confirm whether the determined type of the content providing device 200 is correct.

According to an embodiment, the processor 140 may receive an image from the content providing device 200 and may display the image on the display 120. According to an embodiment, the processor 140 may display the received image and a user interface of the display apparatus 100 on the display 120.

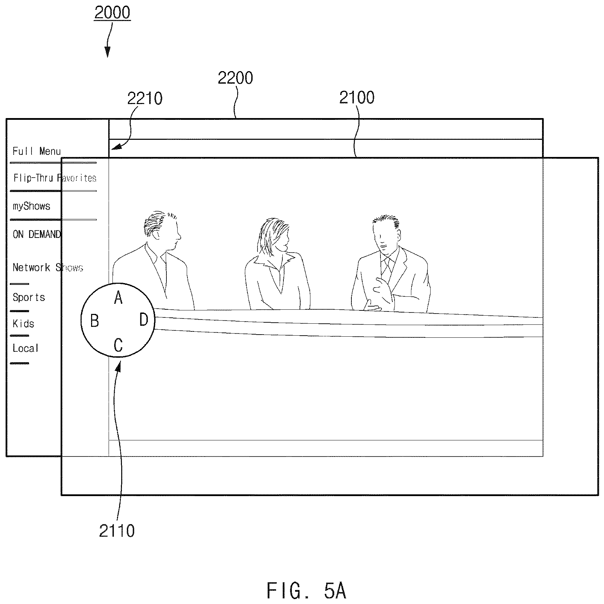

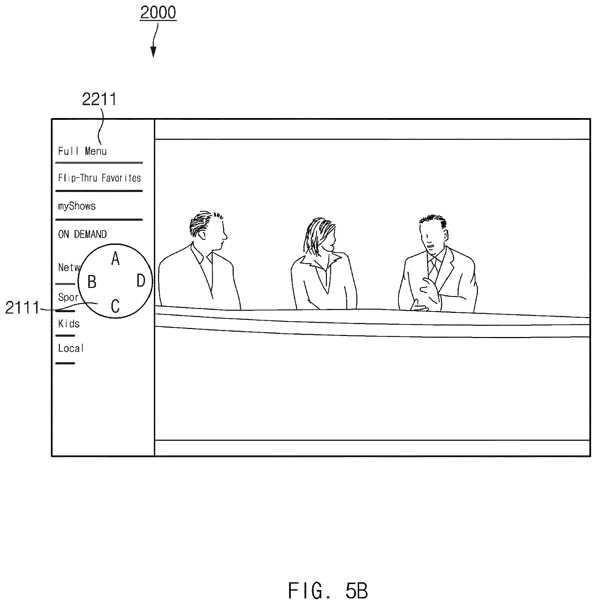

FIGS. 5A and 5B are diagrams illustrating an example screen of a display apparatus, according to various example embodiments of the present disclosure.

Referring to FIG. 5A, the screen 2000 displayed on the display 120 may include a first layer 2100 and a second layer 2200. According to an embodiment, the first layer 2100 may include a first user interface 2110 provided by the display apparatus 100. According to an embodiment, the second layer 2200 may include an image received from the content providing device 200. The received image may include a second user interface 2210. Referring to FIG. 5B, a virtual input button 2111 of the first user interface 2110 and a top menu 2211 of the second user interface 2210 may be displayed on the display 120 while overlapping each other. Therefore, the first user interface 2110 included in the first layer 2100 and the second user interface 2210 included in the second layer 2200 may overlap each other.

According to an embodiment, the processor 140 may receive an image from the content providing device 200 through the communication interface 110. For example, the processor 140 may receive an image including the second user interface 2210 from the content providing device 200.

According to an embodiment, the processor 140 may determine the position of the second user interface 2210 included in the image received from the content providing device 200.

According to an embodiment, the processor 140 may determine information on the position of the second user interface 2210 using key mapping information of the second user interface 2210, which is stored in the memory 130. For example, if the processor 140 receives key input information from the remote controller 300, the processor 140 may determine the position of the second user interface 2210 using the key mapping information. The processor 140 may determine the information on the position of the second user interface 221 corresponding to the key input information, based on the key mapping information. In the case that the processor 140 determines the position of the second user interface 2210 based on the key mapping information, the processor 140 may rapidly determine the position of the second user interface 2210.

According to an embodiment, when the processor 140 receives key input information from the remote controller 300, the information on the position of the second user interface 2210 may be acquired from an external server. The processor 140 may transmit key input information, which is received from the remote controller 300, to the external server. The external server may determine information on the position of the second user interface 2210 corresponding to the key input information, which is received by the display apparatus 100, by using the key mapping information. The processor 140 may receive the information on the position of the second user interface 2210 corresponding to the key input information from the external server.

According to an embodiment, the processor 140 may analyze the image received from the content providing device 200 to acquire the information on the position of the second user interface 2210. Accordingly, the processor 140 may acquire the information on the position of the second user interface 2210 even if the processor 140 does not receive key input information from the remote controller 300. The processor 140 may analyze the position of the second user interface 2210 included in the received image using an image analysis algorithm. According to an embodiment, the processor 140 may store the acquired information on the position of the second user interface 2210 in the memory 130. In the case that the processor 140 determines the position of the second user interface 2210 by directly analyzing the received image, the processor 140 may determine the position of the second user interface 2210 of the content providing device 200 even if the type of the content providing device 200 is not stored in the memory 130 or the external server.

According to an embodiment, the processor 140 may determine a position of the first user interface 2110 if an event occurs to display the first user interface 2110. For example, if the processor 140 receives a key input from the remote controller 300 or if an event (e.g., the arrival of a termination time) set by a user occurs, the processor 140 may determine the type of the first user interface 2110 corresponding to the occurring event and a display position of the first user interface 2110.

According to an embodiment, the processor 140 may determine information on a position of the first user interface 2110 using key mapping information of the first user interface 2110, which is stored in the memory 130. The processor 140 may determine the information on the position of the first user interface 2110 corresponding to the received key input information, based on the key mapping information.

According to an embodiment, the processor 140 may compare the information on the position of the first user interface 2110 with the information on the position of the second user interface 2210 to determine whether the first user interface 2110 overlaps the second user interface 2210. According to an embodiment, if the processor 140 determines the first user interface 2110 as overlapping the second user interface 2210, the processor 140 may display the first user interface 2110 and the second user interface 2210 on the display 120 by separating the first user interface 2110 from the second user interface 2210.

According to an embodiment, the processor 140 may control the position of the first user interface 2110 such that the first user interface 2110 does not substantially overlap with the second user interface 2210. For example, when the first user interface 2110 overlaps the second user interface 2210, the processor 140 may change the position of the first user interface 2110 displayed on the display 120 to avoid the first user interface 2110 from overlapping the second user interface 2210. Alternatively, when the first user interface 2110 does not overlap the second user interface 2210, the processor 140 may not change the position of the first user interface 2110 displayed on the display 120.

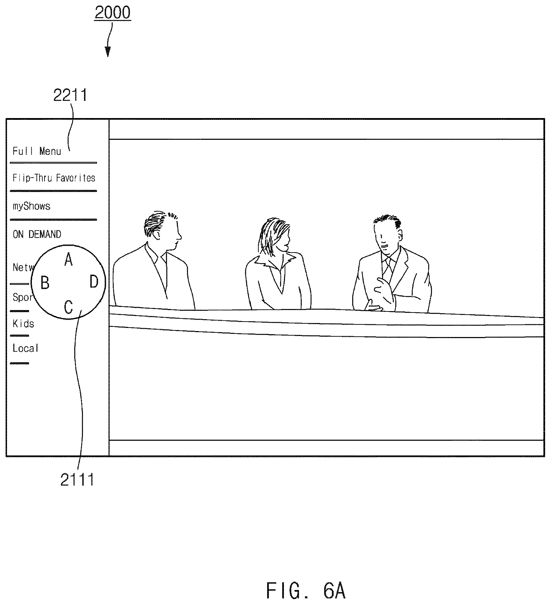

According to an embodiment, the processor 140 may display the first user interface 2110 such that the first user interface 2110 avoids overlapping the second user interface 2210. For example, the processor 140 may change at least one of the position and the size of the first user interface 2110 to display the first user interface 2110 such that the first user interface 2110 avoids overlapping the second user interface 2210. According to an embodiment, the processor 140 may display the first user interface 2110 with at least one of the transparency and a display period different from those of the second user interface 2210. Various example embodiments of displaying the first user interface 2110 by separating the first user interface 2110 from the second user interface 2210 will be described with reference to FIGS. 6A, 6B, 6C, 7A, 7B, 7C, 8A, 8B, 8C, 9A, 9B, 10, 11A and FIG. 11B.

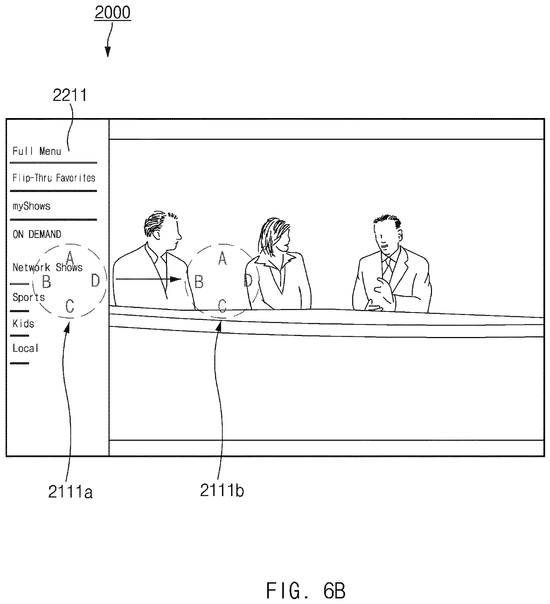

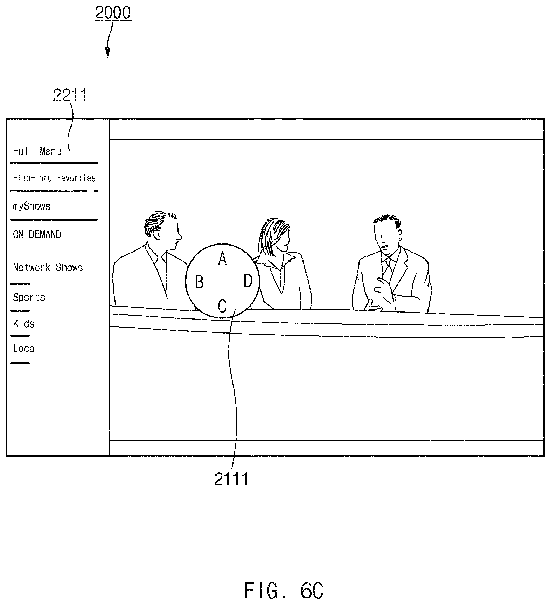

FIGS. 6A, 6B, and 6C are diagrams illustrating example screens displaying a first user interface at a position different from that of a top menu of a second user interface, according to an example embodiment of the present disclosure.

Referring to FIG. 6A, when the display apparatus 100 receives key input information from the remote controller 300, the first user interface 2110 (see FIG. 5A) may be changed. For example, the virtual input button 2111 may be displayed on the screen 2000 of the display 120. When the processor 140 displays the first user interface 2110 without changing the position of the first user interface 2110, the virtual input button 2111 which is the first user interface 2110 may overlap the top menu 2211 which is the second user interface 2210. According to an embodiment, the processor 140 may determine the overlap between the virtual input button 2111 and the top menu 2211.

Referring to FIG. 6B, the processor 140 may move the first user interface 2110 such that the first user interface 2110 does not overlap with the top menu 2211. For example, the processor 140 may move the position of the virtual input button 2111 from a first position 2111a to a second position 2111b so that the virtual input button 2111 does not overlap the top menu 2211.

Referring to FIG. 6C, the processor 140 may display the first user interface 2110 and the second user interface 2210 on the screen 2000 of the display 120 such that the first user interface 2110 is separated from the second user interface 2210, by moving the position of the virtual input button 2111.

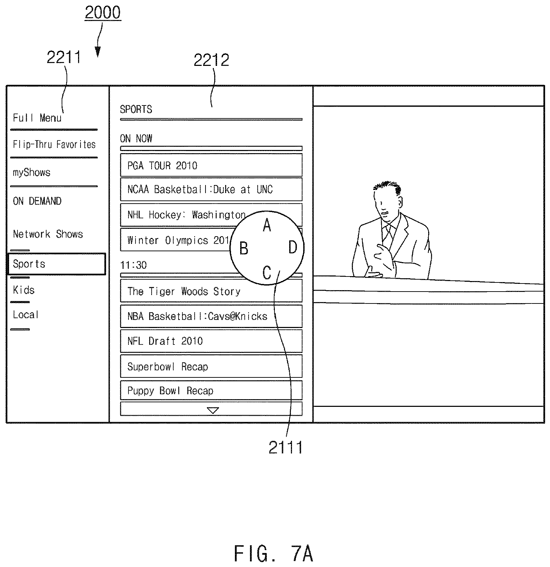

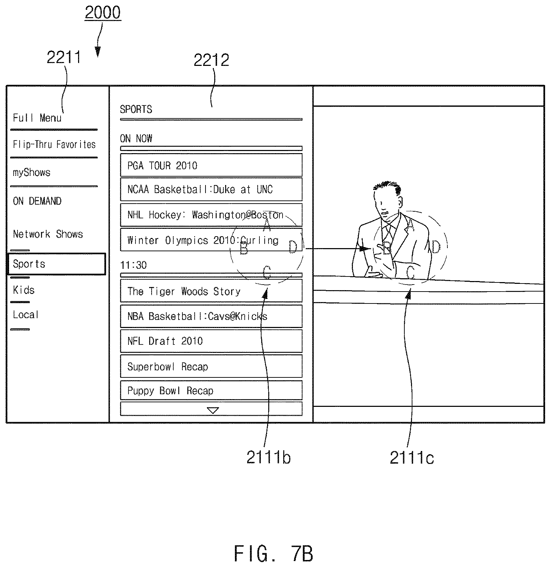

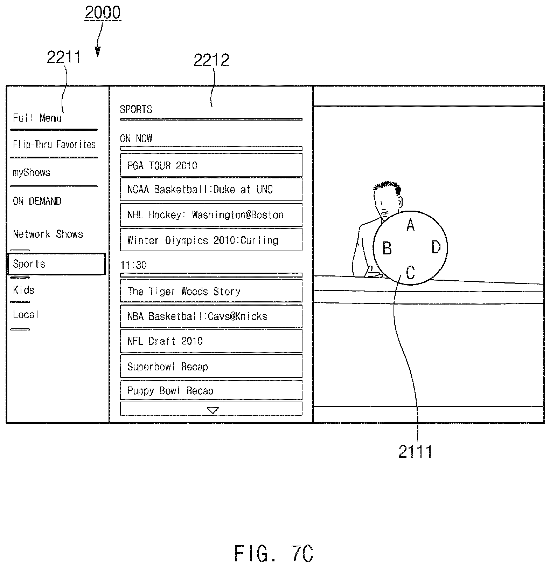

FIGS. 7A, 7B, and 7C are diagrams illustrating example screens displaying a first user interface at a position different from that of a sub-menu of a second user interface, according to an example embodiment of the present disclosure.

Referring to FIG. 7A, when the display apparatus 100 receives key input information from the remote controller 300, which is the second user interface 2210 may be changed. For example, a sub-menu 2212 may be displayed on the screen 2000 of the display 120. For example, when the processor 140 displays the first user interface 2110 without changing the position of the first user interface 2110, the virtual input button 2111 which is the first user interface 2110 may overlap the sub-menu 2212 which is the second user interface 2210. According to an embodiment, the processor 140 may determine the overlap between the virtual input button 2111 and the sub-menu 2212.

Referring to FIG. 7B, the processor 140 may move the position of the virtual input button 2111 to avoid the virtual input button 2111 from overlapping the sub-menu 2212. For example, the processor 140 may move the position of the virtual input button 2111 from the second position 2111b to a third position 2111c to prevent the virtual input button 2111 from overlapping the sub-menu 2212.

Referring to FIG. 7C, the processor 140 may display the first user interface 2110 and the second user interface 2210 on the screen 2000 of the display 120 such that the first user interface 2110 is separated from the second user interface 2210, by moving the position of the virtual input button 2111.

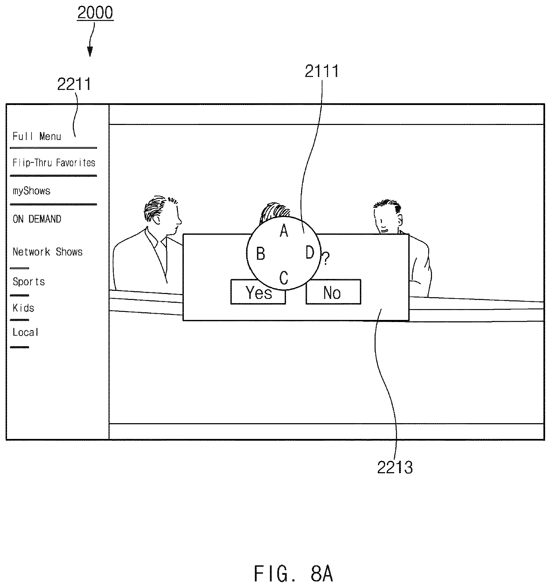

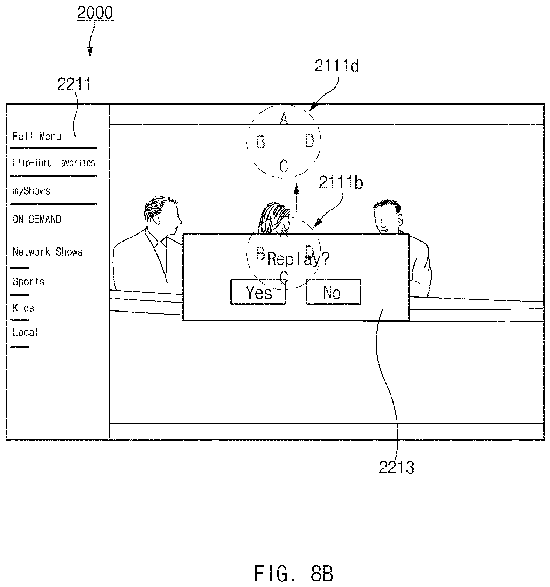

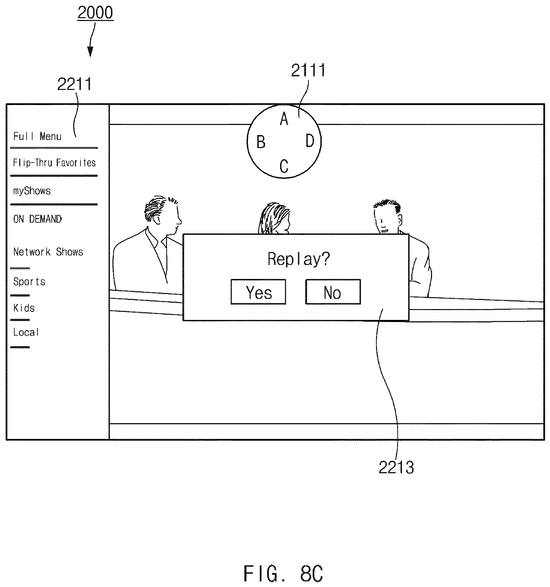

FIGS. 8A, 8B, and 8C are diagrams illustrating example screens displaying a first user interface at a position different from that of a replay popup message of a second user interface, according to an example embodiment of the present disclosure.

Referring to FIG. 8A, when the display apparatus 100 does not receive key input information from the remote controller 300, the second user interface 2210 may be changed. For example, after the content is terminated, a replay popup message 2213 may be displayed on the screen 2000 of the display 120. When the processor 140 displays the first user interface 2110 without changing the position of the first user interface 2110, the virtual input button 2111 which is the first user interface 2110 may overlap the replay popup message 2213 which is the second user interface 2210. According to an embodiment, the processor 140 may determine the overlap between the virtual input button 2111 and the replay popup message 2213. According to an embodiment, the processor 140 may analyze the image transmitted from the content providing device 200 in real time to determine whether the replay popup message 2213 is displayed.

Referring to FIG. 8B, the processor 140 may move the position of the virtual input button 2111 to avoid the virtual input button 2111 from overlapping the replay popup message 2213. For example, the processor 140 may move the position of the virtual input button 2111 from the second position 2111b to a fourth position 2111d to avoid the virtual input button 2111 from overlapping the replay popup message 2213.

Referring to FIG. 8C, the processor 140 may display the first user interface 2110 and the second user interface 2210 on the screen 2000 of the display 120 such that the first user interface 2110 is separated from the second user interface 2210, by moving the position of the virtual input button 2111.

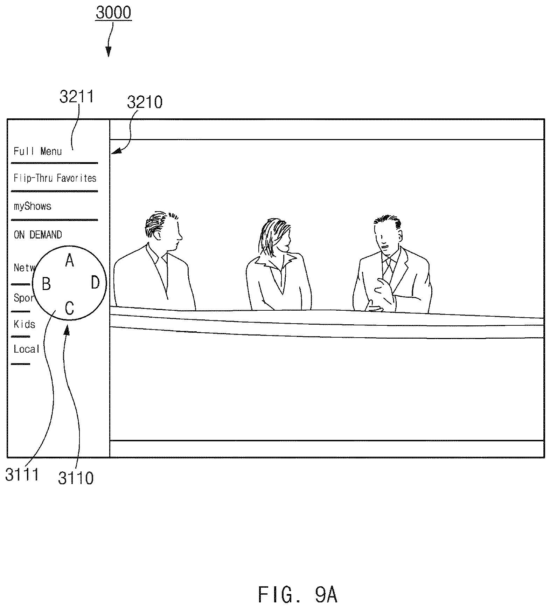

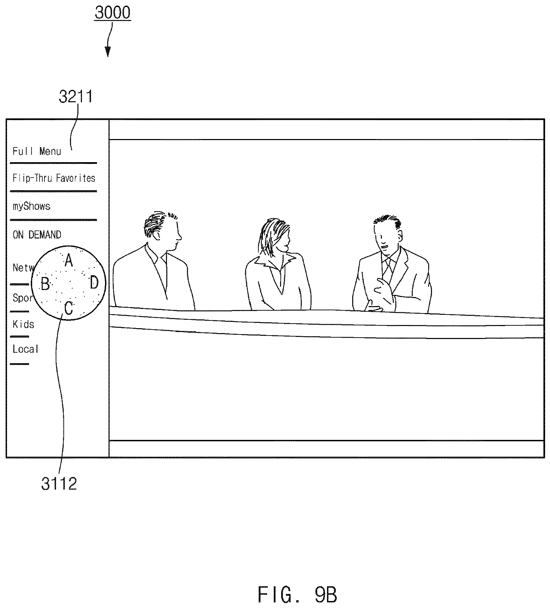

FIGS. 9A and 9B are diagrams illustrating an example screen displaying a first user interface with transparency different from that of a second user interface, according to an example embodiment of the present disclosure.

Referring to FIG. 9A, the processor 140 may determine that a virtual input button 3111, which is a first user interface 3110, overlaps a top-menu 3211, which is a second user interface 3210, on a screen 3000 displayed on the display 120.

Referring to FIG. 9B, the processor 140 may display the virtual input button 3112 with transparency, which is different from that of the top-menu 3211, on the display 120. For example, the processor 140 may display the virtual input button 3112 more marked than the top-menu 3211. Accordingly, the processor 140 may display the first user interface 3110 and the second user interface 3210 on the display 120 by separating the first user interface 3110 from the second user interface 3210.

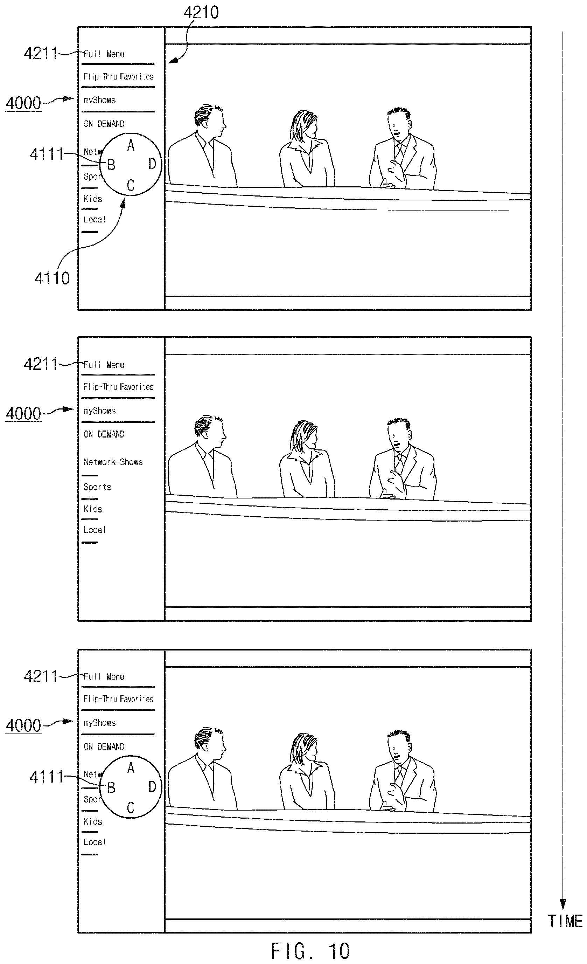

FIG. 10 is a diagram illustrating an example screen displaying a first user interface at a period different from that of a second user interface, according to an example embodiment of the present disclosure.

Referring to FIG. 10, the processor 140 may determine that a virtual input button 4111, which is a first user interface 4110, overlaps a top-menu 4211, which is a second user interface 4210, on a screen 4000 displayed on the display 120. The processor 140 may display the virtual input button 4111 on the display 120 at a period different from that of the top-menu 4211. For example, the processor 140 may allow the virtual input button 4111 to disappear or appear periodically (e.g., at a period of one second). Accordingly, the processor 140 may display the first user interface 4110 and the second user interface 4210 by separating the first user interface 4110 from the second user interface 4210.

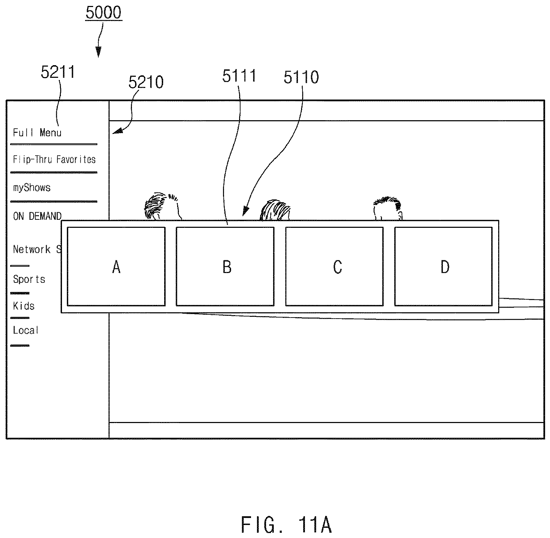

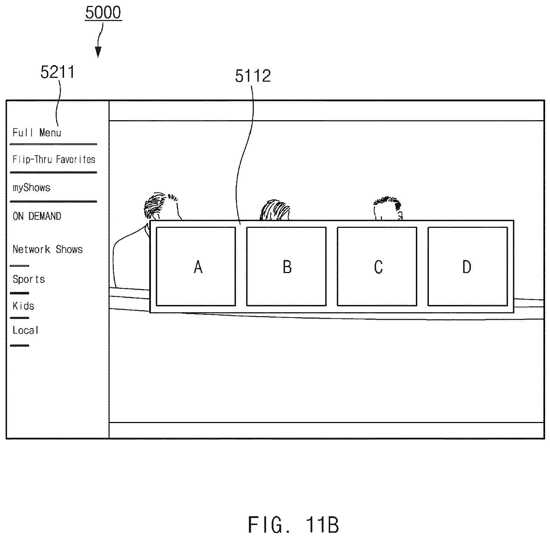

FIGS. 11A and 11B are diagram illustrating an example screen on which the size of a first user interface is changed, according to an example embodiment of the present disclosure.

Referring to FIG. 11A, when the processor 140 receives key input information from the remote controller 300, a first user interface 5110 may be changed. For example, a virtual input button 5111 may be displayed on a screen 5000 of the display 120. The processor 140 may determine the overlap between a virtual input button 5111, which is the first user interface 5110, and a top menu 5211 which is a second user interface 5210.

Referring to FIG. 11B, the processor 140 may change the size of the virtual input button 5112 to avoid the virtual input button 5112 from overlapping the top-menu 5211. For example, the processor 140 may reduce the size of the virtual input button 5112 to avoid the virtual input button 5112 from overlapping the top-menu 5211. Accordingly, the processor 140 may display the first user interface 5110 and the second user interface 5210 by separating the first user interface 5110 from the second user interface 5210.

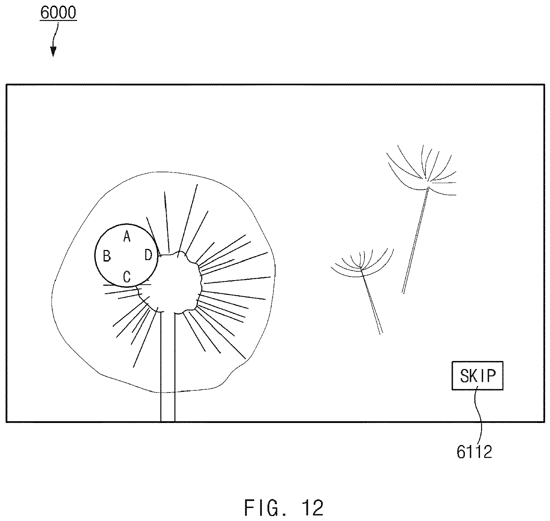

FIG. 12 is a diagram illustrating an example screen on which a skip key is generated, according to an example embodiment of the present disclosure.

Referring to FIG. 12, if content provided from the content providing device 200 is an advertisement, the processor 140 may display a skip key 6112 on a screen 6000 on the display 120. For example, the processor 140 may analyze an image received from the content providing device 200 in real time and may display the skip key 6112 if the analyzed image is an advertisement. The processor 140 may use advertisement information which is previously stored in the memory 130 to determine whether the received image is the advertisement.

According to various embodiments of the present disclosure described with reference to FIGS. 1 to 12, the display apparatus 100 may display the user interface of the display apparatus 100 and the user interface of the content providing device 200 such that the user interface of the display apparatus 100 does not overlap the user interface of the content providing device 200. Accordingly, a user may clearly recognize each user interface.

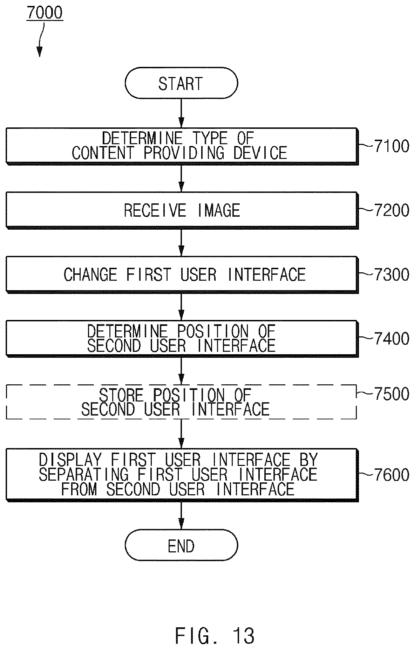

FIG. 13 is a flowchart illustrating an example method of arranging a user interface of a display apparatus, according to various example embodiments of the present disclosure.

The flowchart illustrated in FIG. 13 may include operations processed in the above-described display apparatus 100. Accordingly, although the following description is not fully made, the above description of the display apparatus 100 referring to FIGS. 1 to 12 may be applied to the flowchart illustrated in FIG. 13.

According to an embodiment, in operation 7100, the display apparatus 100 may determine the type of the content providing device 200. The processor 140 may determine the type of the content providing device 200 when the content providing device 200 is connected with the display apparatus 100.

According to an embodiment, in operation 7200, an image may be received from the content providing device 200. The image received from the content providing device 200 may include a user interface.

According to an embodiment, in operation 7300, the user interface may be changed. For example, the first user interface 2110 and the second user interface 2210 may be changed by receiving key input information from the remote controller 300. Alternatively, even if the key input information is not received from the remote controller 300, the second user interface may be changed.

According to an embodiment, in operation 7400, the processor 140 may determine the position of the second user interface 2210 and may compare the position of the second user interface 2210 with the position of the first user interface 2110. For example, the processor 140 may determine the position of the second user interface 2210 using the key mapping information stored in the memory 130. Alternatively, the processor 140 may determine the position of the second user interface 2210 using the key mapping information stored in an external server. Alternatively, the processor 140 may determine the position of the second user interface 2210 by analyzing an image received from the content providing device 200 in rea time. According to an embodiment, the processor 140 may determine whether the first user interface 2110 overlaps the second user interface 2210 by comparing the position of the second user interface 2210 with the position of the first user interface 2110.

According to an embodiment, in operation 7500, if the processor 140 directly analyzes the received image, the processor 140 may store the position of the second user interface 2210 in the memory 300.

According to an embodiment, in operation 7600, the processor 140 may display the first user interface 2110 by separating the first user interface 2110 from the second user interface 2210. For example, the first user interface 2110 may be displayed at a position different from that of the second user interface 2210. Alternatively, the first user interface 2110 may be displayed with transparency different from that of the second user interface 2210. Alternatively, the first user interface 2110 may be displayed at a display period different from that of the second user interface 2210. Alternatively, the first user interface 2110 may be displayed by changing the size of the first user interface 2110 to prevent the first user interface 2110 from overlapping the second user interface 2210.

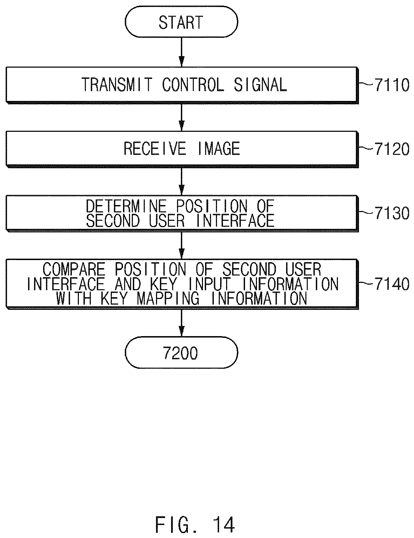

FIG. 14 is a flowchart illustrating an example method of determining the type of a content providing device, according to various example embodiments of the present disclosure.

The flowchart illustrated in FIG. 14 may include operations processed in the above-described display apparatus 100. Accordingly, although the following description is not fully made, the above description of the display apparatus 100 referring to FIGS. 1 to 12 may be applied to the flowchart illustrated in FIG. 14.

According to an embodiment, in operation 7110, the display apparatus 100 may transmit a control signal. For example, the processor 140 may transmit a control signal for allowing the remote controller 300 to transmit key input information.

According to an embodiment, in operation 7120, the display apparatus 100 may receive an image from the content providing device 200. For example, the display apparatus 100 may receive an image, which includes a user interface corresponding to the key input information, from the content providing device 200.

According to an embodiment, in operation 7130, the display apparatus 100 may determine the position of the second user interface 2210. For example, the processor 140 may determine the position of the second user interface 2210 by analyzing an image received using an image analysis algorithm.

According to an embodiment, in operation 7140, the display apparatus 100 may compare the position of the second user interface 2210 and key input information with key mapping information. For example, the processor 140 may determine the type of the content providing device 200 by determining the key mapping information matched with the position of the second user interface 2210 and the key input information.

The term "module" used in the present disclosure may refer, for example, to a unit including hardware, software, or firmware or any combination thereof. For example, the term "module" may be interchangeably used with the terms "logic", "logical block", "component", "circuit", or the like. The "module" may be an integrated component or may be a minimum unit for performing one or more functions or a part thereof. The module may be mechanically or electronically implemented. For example, the module may include, without limitation, a dedicated processor, a CPU, an application-specific integrated circuit (ASIC) chips, field-programmable gate arrays (FPGAs), or programmable logical devices which perform certain operations, are known to perform the operations, or are to be developed in the future.

According to various embodiments, at least a portion of an apparatus (e.g., modules or functions thereof) or a method (e.g., operations) may be implemented by instructions stored in a computer-readable storage medium in the form of a programmable module. When the instruction are executed a processor, the processor may perform a function corresponding to the instruction. A computer-readable recording medium may include a hard disc, a floppy disc, a magnetic medium (e.g., a magnetic tape), an optical recording medium (e.g., compact disc Read Only Memory (CD-ROM), a digital versatile disc (DVD), a magneto-optical medium (e.g., a floptical disc), or an embedded medium. The instruction may include a code generated by a compiler or a code that may be executed by an interpreter. According to various embodiments, the module or a program module may include at least one of the above-described components, may include part of the above-described components or may further include another component.

According to various embodiments, operations performed by a module, a program module, or other elements may be executed sequentially, in parallel, repeatedly, or in a heuristic method. In addition, some operations may be executed in different sequences or may be omitted. Alternatively, other operations may be added. Although the embodiments disclosed in the present disclosure have been described for the illustrative purpose, it will be understood by those skilled in the art that this disclosure is not limited thereto, but various changes and modifications of the embodiments may be made without departing from the scope of the invention as defined by the appended claims.

As described above, according to the display apparatus and the method of separately displaying user interfaces thereon in the present disclosure, the user interface of the display apparatus and the user interface of the content providing device are separately displayed on the display without overlapping each other by using the information on the user interface of the content providing device, which is stored in the memory. Accordingly, a user may clearly distinguish between the user interfaces.

In addition, even if the image is not stored in the memory of the display apparatus, the image is received from the external server or the content providing device and analyzed to detect the position of the user interface of the content providing device.

While the present disclosure has been illustrated and described with reference to various example embodiments thereof, it will be understood by those skilled in the art that various changes in form and details may be made therein without departing from the scope of the present invention as defined by the appended claims.

## Claims

1. A display apparatus (100) comprising:
a communication interface (110) comprising communication interface circuitry configured to communicate with a content providing device (200) and a remote controller (300);
a memory (130) storing a first user interface and key mapping information, wherein the key mapping information includes stored key input information for identifying a plurality of keys included in the remote controller (300) and information regarding the position of a second user interface corresponding to the stored key input information;
a display (120); and
a processor (140), configured to:
receive an image including the second user interface from the content providing device (200) through the communication interface,
receive key input information from the remote controller through the communication interface,
determine a position of the second user interface included in the received image using the key mapping information corresponding to the key input information received from the remote controller, and
display the image received from the content providing device, and the first user interface, by changing at least one from among a position, a size and a display period of the first user interface so that the first user interface is provided separately from the second user interface on the display.

2. The display apparatus (100) of claim 1, wherein the memory (130) is configured to:
store key mapping information including key input information and information on a position of the second user interface corresponding to the key input information based on a type of the content providing device (200), and
wherein the processor (140) is configured to:
determine a type of the content providing device using the key mapping information if the content providing device is connected through the communication interface (110).

3. The display apparatus (100) of claim 2, wherein the processor (140) is configured to:
transmit a control signal allowing the remote controller (300) to transmit the key input information to the content providing device (200),
receive an image including a second user interface corresponding to the key input information transmitted from the remote controller to the content providing device, determine a position of the second user interface by analyzing the received image; and
determine the type of the content providing device by comparing the position of the second user interface and the key input information with the key mapping information.

4. The display apparatus (100) of any one of claims 1 to 3, wherein the processor (140) is configured to:
transmit key input information to an external server storing key mapping information if the key input information is received from the remote controller (300), and
receive the position of the second user interface corresponding to the key input information, from the external server.

5. The display apparatus (100) of any one of claims 1 to 4, wherein the processor (140) is configured to:
analyze the image using an image analysis algorithm to determine the position of the second user interface.

6. The display apparatus (100) of claim 5, wherein the processor (140) is configured to:
store the determined position of the second user interface in the memory (130).

7. The display apparatus (100) of any one of claims 1 to 6, wherein the processor (140) is configured to:
display the first user interface so as to not overlap with the second user interface.

8. A method of separately displaying a user interface of a display apparatus, the method comprising:
storing a first user interface and key mapping information, wherein the key mapping information includes stored key input information for identifying a plurality of keys included in a remote controller and information regarding the position of a second user interface corresponding to the stored key input information;
receiving an image including the second user interface, from a content providing device through a communication interface;
receiving key input information from the remote controller through the communication interface;
determining a position of the second user interface included in the received image using the key mapping information corresponding to the key input information received from the remote controller; and
displaying the image received from the content providing device, and the first user interface, by changing at least one from among a position, a size and a display period of the first user interface, so that the first user interface is provided separately from the second user interface.

9. The method of claim 8, further comprising:
determining a type of the content providing device connected with the display apparatus including the first user interface.

10. The method of claim 9, wherein the determining of the type of the content providing device includes:
transmitting a control signal allowing a remote controller to transmit key input information;
receiving the image including the second user interface from the content providing device;
determining the position of the second user interface; and
comparing the position of the second user interface and the key input information with key mapping information.

11. The method of any one of claims 8 to 10, wherein the determining of the position of the second user interface includes:
transmitting received key input information to an external server having key mapping information; and
receiving information on the position of the second user interface corresponding to the key input information from the external server.

## Patentansprüche

1. Anzeigevorrichtung (100), umfassend:
eine Kommunikationsschnittstelle (110), die eine Kommunikationsschnittstellenschaltungsanordnung umfasst, die zur Kommunikation mit einer Inhalt bereitstellenden Vorrichtung (200) und einer Fernbedienung (300) konfiguriert ist,
einen Speicher (130), der eine erste Benutzerschnittstelle und Tastenabbildungsinformationen speichert, wobei die Tastenabbildungsinformationen gespeicherte Tasteneingabeinformationen zur Kennzeichnung mehrerer in der Fernbedienung (300) enthaltener Tasten und Informationen bezüglich der Position einer zweiten Benutzerschnittstelle, die den gespeicherten Tasteneingabeinformationen entsprechen, aufweisen;
eine Anzeige (120) und
einen Prozessor (140), der konfiguriert ist zum:
Empfangen eines Bilds, das die zweite Benutzerschnittstelle aufweist, von der Inhalt bereitstellenden Vorrichtung (200) durch die Kommunikationsschnittstelle,
Empfangen von Tasteneingabeinformationen von der Fernbedienung durch die Kommunikationsschnittstelle,
Bestimmen einer Position der zweiten Benutzerschnittstelle, die in dem empfangenen Bild enthalten ist, unter Verwendung der Tastenabbildungsinformationen, die den von der Fernbedienung empfangenen Tasteneingabeinformationen entsprechen, und
Anzeigen des von der Inhalt bereitstellenden Vorrichtung empfangenen Bilds und der ersten Benutzerschnittstelle durch Ändern von wenigstens einem der Folgenden: einer Position, einer Größe und einer Anzeigedauer der ersten Benutzerschnittstelle, so dass die erste Benutzerschnittstelle von der zweiten Benutzerschnittstelle getrennt auf der Anzeige bereitgestellt wird.

2. Anzeigevorrichtung (100) nach Anspruch 1, wobei der Speicher (130) konfiguriert ist zum:
Speichern von Tastenabbildungsinformationen, die Tasteneingabeinformationen und Informationen über eine Position der zweiten Benutzerschnittstelle, die den Tasteneingabeinformationen entsprechen, aufweisen, auf Basis eines Typs der Inhalt bereitstellenden Vorrichtung (200), und
wobei der Prozessor (140) konfiguriert ist zum:
Bestimmen eines Typs der Inhalt bereitstellenden Vorrichtung unter Verwendung der Tastenabbildungsinformationen, falls die Inhalt bereitstellende Vorrichtung durch die Kommunikationsschnittstelle (110) verbunden ist.

3. Anzeigevorrichtung (100) nach Anspruch 2, wobei der Prozessor (140) konfiguriert ist zum:
Übertragen eines Steuersignals, das zulässt, dass die Fernbedienung (300) die Tasteneingabeinformationen an die Inhalt bereitstellende Vorrichtung (200) überträgt,
Empfangen eines Bilds, das eine zweite Benutzerschnittstelle aufweist, die den von der Fernbedienung an die Inhalt bereitstellende Vorrichtung übertragenen Tasteneingabeinformationen entspricht, Bestimmen einer Position der zweiten Benutzerschnittstelle durch Analysieren des empfangenen Bilds; und
Bestimmen des Typs der Inhalt bereitstellenden Vorrichtung durch Vergleichen der Position der zweiten Benutzerschnittstelle und der Tasteneingabeinformationen mit den Tastenabbildungsinformationen.

4. Anzeigevorrichtung (100) nach einem der Ansprüche 1 bis 3, wobei der Prozessor (140) konfiguriert ist zum:
Übertragen von Tasteneingabeinformationen an einen externen Server, der Tastenabbildungsinformationen speichert, falls die Tasteneingabeinformationen von der Fernbedienung (300) empfangen werden, und
Empfangen der Position der zweiten Benutzerschnittstelle, die den Tasteneingabeinformationen entspricht, vom externen Server.

5. Anzeigevorrichtung (100) nach einem der Ansprüche 1 bis 4, wobei der Prozessor (140) konfiguriert ist zum:
Analysieren des Bilds unter Verwendung eines Bildanalysealgorithmus zum Bestimmen der Position der zweiten Benutzerschnittstelle.

6. Anzeigevorrichtung (100) nach Anspruch 5, wobei der Prozessor (140) konfiguriert ist zum:
Speichern der bestimmten Position der zweiten Benutzerschnittstelle im Speicher (130).

7. Anzeigevorrichtung (100) nach einem der Ansprüche 1 bis 6, wobei der Prozessor (140) konfiguriert ist zum:
Anzeigen der ersten Benutzerschnittstelle, so dass sie mit der zweiten Benutzerschnittstelle nicht überlappt.

8. Verfahren zum getrennten Anzeigen einer Benutzerschnittstelle einer Anzeigevorrichtung, wobei das Verfahren Folgendes umfasst:
Speichern einer ersten Benutzerschnittstelle und Tastenabbildungsinformationen, wobei die Tastenabbildungsinformationen gespeicherte Tasteneingabeinformationen zur Kennzeichnung mehrerer in einer Fernbedienung enthaltener Tasten und Informationen bezüglich der Position einer zweiten Benutzerschnittstelle, die den gespeicherten Tasteneingabeinformationen entsprechen, aufweisen;
Empfangen eines Bilds, das die zweite Benutzerschnittstelle aufweist, von einer Inhalt bereitstellenden Vorrichtung durch eine Kommunikationsschnittstelle;
Empfangen von Tasteneingabeinformationen von der Fernbedienung durch die Kommunikationsschnittstelle,
Bestimmen einer Position der zweiten Benutzerschnittstelle, die in dem empfangenen Bild enthalten ist, unter Verwendung der Tastenabbildungsinformationen, die den von der Fernbedienung empfangenen Tasteneingabeinformationen entsprechen; und
Anzeigen des von der Inhalt bereitstellenden Vorrichtung empfangenen Bilds und der ersten Benutzerschnittstelle durch Ändern von wenigstens einem der Folgenden: einer Position, einer Größe und einer Anzeigedauer der ersten Benutzerschnittstelle, so dass die erste Benutzerschnittstelle von der zweiten Benutzerschnittstelle getrennt bereitgestellt wird.

9. Verfahren nach Anspruch 8, das ferner Folgendes umfasst:
Bestimmen eines Typs der Inhalt bereitstellenden Vorrichtung, die mit der Anzeigevorrichtung verbunden ist, die die erste Benutzerschnittstelle aufweist.

10. Verfahren nach Anspruch 9, wobei das Bestimmen des Typs der Inhalt bereitstellenden Vorrichtung Folgendes aufweist:
Übertragen eines Steuersignals, das zulässt, dass eine Fernbedienung Tasteneingabeinformationen überträgt,
Empfangen eines Bilds, das die zweite Benutzerschnittstelle aufweist, von der Inhalt bereitstellenden Vorrichtung;
Bestimmen der Position der zweiten Benutzerschnittstelle; und
Vergleichen der Position der zweiten Benutzerschnittstelle und der Tasteneingabeinformationen mit den Tastenabbildungsinformationen.

11. Verfahren nach einem der Ansprüche 8 bis 10, wobei das Bestimmen der Position der zweiten Benutzerschnittstelle Folgendes aufweist:
Übertragen von empfangenen Tasteneingabeinformationen an einen externen Server, der Tastenabbildungsinformationen hat; und
Empfangen von Informationen über die Position der zweiten Benutzerschnittstelle, die den Tasteneingabeinformationen entsprechen, vom externen Server.

## Revendications

1. Appareil d'affichage (100) comprenant :
une interface de communication (110) comprenant un circuit d'interface de communication configuré pour communiquer avec un dispositif de fourniture de contenu (200) et un dispositif de commande à distance (300) ;
une mémoire (130) stockant une première interface utilisateur et des informations de mappage de touche, dans lequel les informations de mappage de touche comprennent des informations d'entrée de touche stockées pour identifier une pluralité de touches comprise dans le dispositif de commande à distance (300) et des informations concernant la position d'une seconde interface utilisateur correspondant aux informations d'entrée de touche stockées ;
une unité d'affichage (120) ; et
un processeur (140), configuré pour :
recevoir une image comprenant la seconde interface utilisateur à partir du dispositif de fourniture de contenu (200) par le biais de l'interface de communication,
recevoir des informations d'entrée de touche à partir du dispositif de commande à distance par le biais de l'interface de communication,
déterminer une position de la seconde interface utilisateur comprise dans l'image reçue au moyen des informations de mappage de touche correspondant aux informations d'entrée de touche reçues à partir du dispositif de commande à distance, et
afficher l'image reçue à partir du dispositif de fourniture de contenu, et de la première interface utilisateur, en modifiant au moins un élément parmi une position, une taille et une période d'affichage de la première interface utilisateur de sorte que la première interface utilisateur soit fournie séparément de la seconde interface utilisateur sur l'unité d'affichage.

2. Appareil d'affichage (100) selon la revendication 1, dans lequel la mémoire (130) est configurée pour :
stocker des informations de mappage de touche comprenant des informations d'entrée de touche et des informations sur une position de la seconde interface utilisateur correspondant aux informations d'entrée de touche sur la base d'un type du dispositif de fourniture de contenu (200), et
dans lequel le processeur (140) est configuré pour :
déterminer un type du dispositif de fourniture de contenu au moyen des informations de mappage de touche si le dispositif de fourniture de contenu est connecté par le biais de l'interface de communication (110).

3. Appareil d'affichage (100) selon la revendication 2, dans lequel le processeur (140) est configuré pour :
transmettre un signal de commande permettant au dispositif de commande à distance (300) de transmettre les informations d'entrée de touche au dispositif de fourniture de contenu (200),
recevoir une image comprenant une seconde interface utilisateur correspondant aux informations d'entrée de touche transmises à partir du dispositif de commande à distance au dispositif de fourniture de contenu,
déterminer une position de la seconde interface utilisateur par l'analyse de l'image reçue ; et
déterminer le type de dispositif de fourniture de contenu en comparant la position de la seconde interface utilisateur et les informations d'entrée de touche avec les informations de mappage de touche.

4. Appareil d'affichage (100) selon l'une quelconque des revendications 1 à 3, dans lequel le processeur (140) est configuré pour :
transmettre des informations d'entrée de touche à un serveur externe stockant des informations de mappage de touche si les informations d'entrée de touche sont reçues à partir du dispositif de commande à distance (300), et
recevoir la position de la seconde interface utilisateur correspondant aux informations d'entrée de touche, à partir du serveur externe.

5. Appareil d'affichage (100) selon l'une quelconque des revendications 1 à 4, dans lequel le processeur (140) est configuré pour :
analyser l'image au moyen d'un algorithme d'analyse d'image pour déterminer la position de la seconde interface utilisateur.

6. Appareil d'affichage (100) selon la revendication 5, dans lequel le processeur (140) est configuré pour :
stocker la position déterminée de la seconde interface utilisateur dans la mémoire (130).

7. Appareil d'affichage (100) selon l'une quelconque des revendications 1 à 6, dans lequel le processeur (140) est configuré pour :
afficher la première interface utilisateur de sorte qu'elle ne chevauche pas la seconde interface utilisateur.

8. Procédé pour afficher séparément une interface utilisateur d'un appareil d'affichage, le procédé comprenant :
le stockage d'une première interface utilisateur et d'informations de mappage de touche, dans lequel les informations de mappage de touche comprennent des informations d'entrée de touche stockées pour identifier une pluralité de touches comprise dans un dispositif de commande à distance et des informations concernant la position d'une seconde interface utilisateur correspondant aux informations d'entrée de touche stockées ;
la réception d'une image comprenant la seconde interface utilisateur, à partir d'un dispositif de fourniture de contenu par le biais d'une interface de communication ;
la réception d'informations d'entrée de touche à partir du dispositif de commande à distance par le biais de l'interface de communication ;
la détermination d'une position de la seconde interface utilisateur comprise dans l'image reçue au moyen des informations de mappage de touche correspondant aux informations d'entrée de touche reçues à partir du dispositif de commande à distance ; et
l'affichage de l'image reçue à partir du dispositif de fourniture de contenu, et de la première interface utilisateur, en modifiant au moins un élément parmi une position, une taille et une période d'affichage de la première interface utilisateur, de sorte que la première interface utilisateur soit disposée séparément de la seconde interface utilisateur.

9. Procédé selon la revendication 8, comprenant en outre :
la détermination d'un type du dispositif de fourniture de contenu connecté à l'appareil d'affichage comprenant la première interface utilisateur.

10. Procédé selon la revendication 9, dans lequel la détermination du type du dispositif de fourniture de contenu comprend :
la transmission d'un signal de commande permettant à un dispositif de commande à distance de transmettre des informations d'entrée de touche ;
la réception de l'image comprenant la seconde interface utilisateur à partir du dispositif de fourniture de contenu ;
la détermination de la position de la seconde interface utilisateur ; et
la comparaison de la position de la seconde interface utilisateur et des informations d'entrée de touche avec les informations de mappage de touche.

11. Procédé selon l'une quelconque des revendications 8 à 10, dans lequel la détermination de la position de la seconde interface utilisateur comprend :
la transmission d'informations d'entrée de touche reçues à un serveur externe comprenant des informations de mappage de touche ; et
la réception d'informations sur la position de la seconde interface utilisateur correspondant aux informations d'entrée de touche à partir du serveur externe.
